# EUROPEAN PATENT SPECIFICATION

(11) **EP 2 774 963 B1**
(45) Date of publication and mention of the grant of the patent: **03.01.2018**
(21) Application number: 13191622.3
(22) Date of filing: 05.11.2013
(51) Int. Cl.: C09D 127/06, C08L 27/06, C08K 5/12, H01B 3/44, C08L 67/02

(54) **Cable coating material, coated cable, and electronic device**
Kabelmantelmaterial, beschichtetes Kabel und elektronische Vorrichtung
Matériau de revêtement de câble, câble revêtu et dispositif électronique

(30) Priority: 08.03.2013 JP 2013046484
(43) Date of publication of application: 10.09.2014
(73) Proprietor: OMRON CORPORATION, Kyoto-shi, Kyoto 600-8530 (JP)
(72) Inventor: Nishikawa, Kazuyoshi, Kyoto, Kyoto 600-8530 (JP); Inoue, Daisuke, Kyoto, Kyoto 600-8530 (JP); Imabayashi, Tomonari, Kyoto, Kyoto 600-8530 (JP); Ojiro, Shuhei, Kyoto, Kyoto 600-8530 (JP); Kishimoto, Yukitaka, Kyoto, Kyoto 600-8530 (JP); Miyake, Eiichi, Kyoto, Kyoto 600-8530 (JP); Kameda, Takamasa, Kyoto, Kyoto 600-8530 (JP); Honjo, Takuya, Kyoto, Kyoto 600-8530 (JP); Hirao, Koichi, Kyoto, Kyoto 600-8530 (JP)
(74) Representative: Horn Kleimann Waitzhofer Patentanwälte PartG mbB

(56) References cited:
- WO-A1-2011/113707
- JP-A- H03 259 944
- JP-A- 2001 050 442
- US-A- 3 574 667
- US-A- 3 700 616
- US-A- 3 941 908

## Description

### BACKGROUND OF THE INVENTION

### TECHNICAL FIELD

The present invention relates to a cable coating material.

### RELATED ART

Hitherto, various materials have been known as a coating material for an electric wire and a cable. For example, JP 3-259944 A discloses a vinyl chloride resin composition in which a polyester plasticizer and a plasticizer mixture of diisononyl phthalate and butylbenzyl phthalate are added to a vinyl chloride resin.

A coating material as described above is required to have various properties in accordance with a use purpose thereof. For example, a coating material for a cable used in the vicinity of industrial machinery is required to have high flexibility for making the handling of the cable easy, and further required to be excellent in the so-called oil resistance, i.e., such a property that the coating material rarely undergoes swelling, hardening, embrittlement and other damages even when exposed to a cutting oil or the like over a long term.

Cutting oils are classified into a water-soluble cutting oil (also called a coolant) and a water-insoluble cutting oil. In recent years, the water-soluble cutting oil has been the mainstream. Since the water-soluble cutting oil is used in the state of being diluted with water, major species thereof are species each containing a surfactant as an additive. In the water-insoluble cutting oil also, various additives are used to improve the cutting performance.

Additives such as a surfactant are materials that contribute to the improvement of working precision and working efficiency in cutting work. However, the additives have a nature of promoting deterioration of the coating material for a cable or some other. In particular, in recent years, performance of surfactants has been remarkably improved, and the surface-activating effect thereof has been becoming more intensive. Thus, there arises a problem that conventional coating materials cannot gain sufficient long-term reliability.

The vinyl chloride resin composition disclosed in JP 3-259944 A has a measure of oil resistance. However, the composition does not give a sufficient measure for solving the problems as described above.

US Patent 3,941,908 discloses a retractile cord of a telephone handset having individually insulated conductors, wherein a phthalate plasticizer is included to impart low temperature properties to the composition while a phosphate plasticizer is used for flame retardancy and a polymeric plasticizer for resistance to extraction of constituents of the composition by oils encountered during use. The composition also includes a metallic stabilizer, a lubricant, an ultraviolet light absorber, an epoxy resin and epoxidized plasticizing stabilizer.

JP 2001-50442A discloses a flexible conduit using a vinyl chloride resin composition comprises a flexible metallic conduit coated with the following vinyl chloride resin composition. The vinyl chloride resin composition is composed of a vinyl chloride resin of 100 parts to which are added 60 to 100 parts of a plasticizer consisting of a polyester plasticizer in an amount of 50 to 80 wt.% and a phthalic acid plasticizer in an amount of 20 to 50% and 60 to 100 parts of calcium carbonate consisting of calcium carbonate with an average grain size of 0.1 microm or less in an amount of 80 to 95% by weight and calcium carbonate with an average grain size of 1 microm or more in an amount of 5 to 20 wt.%.

### SUMMARY

In light of the present situation described above, the present invention has been made, and an object thereof is to provide a cable coating material high in flexibility and excellent in oil resistance.

In order to solve the above-mentioned problems, the inventor has made eager investigations to gain a finding that a plasticizer component having a specific molecular structure is very effective for improving the oil resistance. On the basis of this finding, the inventor has made further investigations. Thus, the present invention has been achieved.

Accordingly, a cable coating material of the present invention has the features recited in claim 1. It should be noted that all ranges given in this specification include their endpoints unless stated otherwise. For example, the range "1000 to 6000" also includes the endpoints "1000" and "6000".

The aliphatic polyhydric carboxylic acid ester preferably has a weight-average molecular weight of 1000 to 4000.

The aliphatic polyhydric carboxylic acid ester is an adipic acid ester.

The aromatic polyhydric carboxylic acid ester is at least one selected from the group consisting of phthalic acid esters, trimellitic acid esters, and pyromellitic acid esters.

The aromatic polyhydric carboxylic acid ester includes a phthalic acid ester, and a trimellitic acid ester and/or a pyromellitic acid ester.

The cable coating material contains the plasticizer mixture in an amount of 40 to 80 parts by weight, the content by percentage of the aliphatic polyhydric carboxylic acid ester in the total weight of the plasticizer mixture is 40 to 70% by weight, and the content by percentage of the aromatic polyhydric carboxylic acid ester in the total weight of the plasticizer mixture is 30 to 60% by weight.

The present invention also relates to a coated cable including a conductive wire including a conductor and an insulator, and the cable coating material with which the conductive wire is coated.

Furthermore, the present invention relates to an electronic device, and the electronic device is an electronic device including the coated cable.

The cable coating material of the present invention can have high flexibility and excellent oil resistance.

### BRIEF DESCRIPTION OF THE DRAWINGS

Fig. 1 is a schematic sectional view of a coated cable of the present invention; and
Fig. 2 is a schematic perspective view of an electronic device of the present invention.

### DETAILED DESCRIPTION

Hereinafter, a description will be made in more detail about embodiments according to the present invention. However, the present invention is not limited to these embodiments.

### [Embodiment 1: Cable Coating Material]

The cable coating material of the present embodiment is a material containing a vinyl chloride resin and a plasticizer mixture according to claim 1.

As far as the cable coating material contains the above-mentioned components, this cable coating material may optionally contain any different component. Even when the cable coating material contains the different component, the advantageous effects of the present invention are produced. Examples of the different component include fillers such as calcium carbonate and clay, stabilizers (such as Pb-based and Ba-Zn-based stabilizers), flame retardants (such as Sb-based, Al-based, and Mg-based flame retardants), dispersing agents, lubricants, and colorants.

The cable coating material of the present embodiment has the above-mentioned structure, thereby having high flexibility and exhibiting excellent oil resistance. Consequently, the cable coating material of the present embodiment is suitable, particularly, as a coating material for an electric wire or a cable required to have oil resistance. The cable coating material is suitably usable for, for example, a coated cable to be connected to an electronic device used in the vicinity of industrial machinery. In the present specification, such an environment which requires oil resistance may be referred to as an "oil-resistant environment".

The method for producing the cable coating material of the present embodiment is not particularly limited, and may be any method known in the prior art. The cable coating material can be produced, for example, by kneading the vinyl chloride resin and the plasticizer mixture using a Henschel mixer, a mortar mixer, a Banbury mixer or some other machine.

The cable coating material may be formed into a molded product having a desired shape, for example, by melting and kneading the vinyl chloride resin and the plasticizer mixture and extrusion-molding the kneaded material in an extruder.

Hereinafter, a description will be made about each of the components constituting the cable coating material of the present embodiment.

### <Vinyl Chloride Resin>

The vinyl chloride resin in the present embodiment is not particularly limited, and may be any vinyl chloride resin known in the prior art. This vinyl chloride resin may be a homopolymer or a copolymer made from vinyl chloride. Examples of the copolymer made from vinyl chloride include any copolymer made from vinyl chloride, and an olefin such as ethylene or propylene, vinylidene chloride, acrylonitrile, vinyl acetate, or some other; and any graft copolymer obtained by grafting a vinyl chloride monomer into ABS resin, EVA resin, MBS resin, butyl rubber, nitrile rubber, acrylic rubber, chlorinated polyethylene, or some other.

The method for producing the vinyl chloride resin is not particularly limited, and may be a production method known in the prior art. Examples of the method include suspension polymerization, emulsion polymerization, and bulk polymerization methods.

For example, a filler, a flame retardant or a crosslinking agent may be added to the vinyl chloride resin. Examples of such additives include, beside these additives, an antistatic agent, a thixotropic agent, a bleeding-out inhibitor, a surface treatment agent, a lubricant, a fluorescent agent, an antifungal agent, an antibacterial, a metal inactivating agent, a pigment, a processing aid, an antioxidant, a light stabilizer, and a foaming agent.

As the filler, for example, the following are usable: a lauric acid salt, a palmitic acid salt, a stearic acid salt, an oleic acid salt, a phthalic acid salt, a benzoic acid salt, an adipic acid salt, a maleic acid salt, a carbonic acid salt, fumed silica, particulate silica, silica stone, any diatomaceous earth, clay, kaolin, zeolite, silica gel, sericite, kaolinite, flint, feldspar powder, vermiculite, talc, mica, minnesotaite, pyroferrite, or amorphous calcium silicate (or a hydrate thereof).

### <Plasticizer Mixture>

The plasticizer mixture in the present embodiment includes an aliphatic polyhydric carboxylic acid ester and an aromatic polyhydric carboxylic acid ester. It is essential that the cable coating material contains this plasticizer mixture in an amount of 40 to 80 parts by weight relative to 100 parts by weight of the vinyl chloride resin. The cable coating material of the present embodiment, which contains the plasticizer mixture in an amount within this range, is high in flexibility and further excellent in workability so that cable working is easily attained. If the amount of the plasticizer mixture is less than 40 parts by weight relative to 100 parts by weight of the vinyl chloride resin, the plasticizer mixture does not give a sufficient plasticizing effect. If the amount of the plasticizer mixture is more than 80 parts by weight, the plasticizer mixture is lowered in miscibility with the vinyl chloride resin so that cable working may not be easily attained. The plasticizer mixture in the present embodiment is contained in an amount of 40 to 80 parts by weight relative to 100 parts by weight of the vinyl chloride resin. The wording "cable working" herein denotes that a cable is coated with a resin composition or the like.

### <Aliphatic Polyhydric Carboxylic Acid Ester>

The aliphatic polyhydric carboxylic acid ester in the present embodiment is a condensate made from an aliphatic polyhydric carboxylic acid and an alcohol or a polyol (also referred to as an alcohol component hereinafter), and can be obtained by a condensation reaction therebetween known in the prior art. The aliphatic polyhydric carboxylic acid ester in the present embodiment may be a polyester containing, in the molecule thereof, plural ester bonds. In this case also, the aliphatic polyhydric carboxylic acid ester can be obtained by a polycondensation reaction known in the prior art.

About the aliphatic polyhydric carboxylic acid ester in the present embodiment, it is essential that the content by percentage thereof in the total weight of the plasticizer mixture is 40 to 70% by weight. If the content by percentage in the total weight of the plasticizer mixture is less than 40% by weight, the cable coating material may not ensure sufficient oil resistance. If the content by percentage in the total weight of the plasticizer mixture is more than 70% by weight, the aliphatic polyhydric carboxylic acid ester may be lowered in miscibility with the vinyl chloride resin and further the cable coating material may be deteriorated in various properties such as heat resistance. The content by percentage of the aliphatic polyhydric carboxylic acid ester in the total weight of the plasticizer mixture is 40 to 70% by weight.

It is essential that the aliphatic polyhydric carboxylic acid ester in the present embodiment has a weight-average molecular weight of 1000 to 4000. When the weight-average molecular weight is within this range, an excellent effect is produced that while the cable coating material is improved in workability, the plasticizer can be effectively prevented from eluting out from the cable coating material. If the weight-average molecular weight is less than 1000, the plasticizer may elute out from the cable coating material in an oil-resistant environment. If the weight-average molecular weight is more than 4000, compatibility between the plasticizer and the vinyl chloride resin may be lowered so that cable working may not be easily attained. The weight-average molecular weight of the aliphatic polyhydric carboxylic acid ester is 1000 to 4000. When the weight-average molecular weight is within this range, an excellent effect as described above can be further enhanced.

In the present specification, any weight-average molecular weight is a value measured by use of gel permeation chromatography (also referred to as GPC hereinafter) under the following conditions.

Measuring device: LC solution LC-10AT (manufactured by SHIMADZU CORPORATION)
Columns: a single column "KF 801" connected to a single column "KF 802", these columns being manufactured by SHOWA DENKO K.K.
Sample: 0.1% by weight solution in tetrahydrofuran (THF)
Flow rate: 1.0 mL/min
Measuring temperature (column temperature): 40°C
Standard samples for calibration curve: polystyrene (molecular weight: 98900, 37200, 9490, 5870, 2500, 1050, and 578)

The aliphatic polyhydric carboxylic acid ester having the above-mentioned characteristics is obtainable by selecting an appropriate aliphatic polyhydric carboxylic acid and an appropriate alcohol component and adjusting conditions for a reaction therebetween.

In the present embodiment, the aliphatic polyhydric carboxylic acid may be linear or branched, and is preferably a linear saturated dicarboxylic acid having 4 to 12 (both inclusive) carbon atoms. Examples of such dicarboxylic acid include succinic acid, glutaric acid, adipic acid, pimelic acid, suberic acid, azelaic acid, and sebacic acid. Out of these acids, adipic acid is particularly preferred as the aliphatic polyhydric carboxylic acid. In other words, the aliphatic polyhydric carboxylic acid ester in the present embodiment is in particular preferably an adipic acid ester and/or an adipic acid polyester.

The ester or polyester containing structural units each originating from adipic acid is very high in affinity with the vinyl chloride resin. Thus, even when a cable coating material containing, as a plasticizer, this ester or polyester is exposed to a cutting oil or the like over a long term, inconveniences as described in the following are caused only with very low frequency: swelling of the cable by the penetration of oils such as mineral oils into the resin, hardening of the cable by elution-out of the plasticizer, or embrittlement of the cable following the swelling or hardening. Furthermore, the cable coating material can realize sufficient long-term reliability against cutting oils such as those containing a surfactant for promoting resin-deterioration that have been the mainstream as cutting oils in recent years.

In the present embodiment, the alcohol component is preferably a monohydric aliphatic alcohol or a dihydric aliphatic alcohol (diol). A polyhydric aliphatic alcohol having three or more hydroxyl groups or an aromatic alcohol can also be appropriately used as far as the plasticizer effect of the present invention is not sacrificed.

Examples of the monohydric aliphatic alcohol include methanol, ethanol, 1-propanol, 2-propanol, butanol, 2-butanol, isobutyl alcohol, tertiary-butyl alcohol, amyl alcohol, hexanol, isohexanol, heptanol, 2-heptanol, octanol, isooctanol, 2-ethylhexanol, nonanol, isononanol, decanol, isodecanol, undecanol, isoundecanol, dodecanol, 2-butyloctanol, 2-butyldecanol, 2-hexyloctanol, 2-hexyldecanol, stearyl alcohol, 2-octyldecanol, 2-hexyldodecanol, 2-octyldodecanol, 2-decyltetradecanol, tridecyl alcohol, and isotridecyl alcohol.

Examples of the dihydric aliphatic alcohol (diol) include ethylene glycol, 1,2-propanediol, 1,3-propanediol, 2-butyl-2-ethyl-1,3-propanediol, 1,4-butanediol, neopentyl glycol, 3-methyl-2,4-pentanediol, 2,4-pentanediol, 1,5-pentanediol, 3-methyl-1,5-pentanediol, 2,4-diethyl-1,5-pentanediol, 1,6-hexanediol, 1,7-heptanediol, 3,5-heptanediol, 1,8-octanediol, 2-methyl-1,8-octanediol, 1,9-nonanediol, and 1,10-decanediol.

In the present embodiment, as the alcohol component, the alcohols listed above may be used alone or in the form of a mixture of two or more thereof. In order to adjust the weight-average molecular weight of the aliphatic polyhydric carboxylic acid ester into the range of 1000 to 4000, the weight-average molecular weight of the alcohol is preferably about 40 to 500.

When the aliphatic polyhydric carboxylic acid is caused to react with the alcohol component so as to be esterified, it is preferred to use an esterification catalyst.

Examples of the esterification catalyst include acidic catalysts such as sulfuric acid, phosphoric acid, zinc chloride, benzenesulfonic acid, p-toluenesulfonic acid, and 4-chlorobenzenesulfonic acid; alkoxytitanium compounds such as tetramethoxytitanium, tetraethoxytitanium, and tetraisopropoxytitanium; titanium acylate compounds such as polyhydroxytitanium stearate and polyisopropoxytitanium stearate; titanium chelate compounds such as titanium acetylacetate, triethanolamine titanate, titanium ammonium lactate, titanium ethyl lactate, and titanium octylene glycolate; tin compounds such as dibutyltin dilaurate, dibutyltin oxide, and dibutyltin diacetate; acetic acid metal salts such as magnesium acetate, calcium acetate, and zinc acetate; and metal oxides such as antimony oxide and zirconium oxide.

These esterification catalysts may be used alone or in any appropriate combination.

### <Aromatic Polyhydric Carboxylic Acid Ester>

The aromatic polyhydric carboxylic acid ester in the present embodiment is a condensate made from an aromatic polyhydric carboxylic acid and an alcohol component, and can be obtained by a condensation reaction therebetween known in the prior art. The aromatic polyhydric carboxylic acid ester in the present embodiment may be a polyester containing, in the molecule thereof, plural ester bonds. In this case also, the ester can be obtained by a polycondensation reaction known in the prior art.

About the aromatic polyhydric carboxylic acid ester in the present embodiment, it is essential that the content by percentage thereof in the total weight of the plasticizer mixture is 30 to 60% by weight. The plasticizer mixture in the present embodiment contains, together with the above-mentioned aliphatic polyhydric carboxylic acid ester, the aromatic polyhydric carboxylic acid ester in an amount within this range, whereby the plasticizer mixture can be enhanced in dispersibility in the vinyl chloride resin. Additionally, excellent properties such as heat resistance can be given to the vinyl chloride resin, as well as flexibility and oil resistance. The content by percentage of the aromatic polyhydric carboxylic acid ester in the total weight of the plasticizer mixture is 30 to 60% by weight.

The aromatic polyhydric carboxylic acid in the present invention is phthalic acid, trimellitic acid or pyromellitic acid out of these examples. When at least two are used in combination out of phthalic acid, trimellitic acid and pyromellitic acid, it is possible to further enhance the effect of improving the dispersibility and heat resistance that are obtained by these plasticizers. According to claim 1 phthalic acid is used in combination with trimellitic acid and/or pyromellitic acid.

Examples of the alcohol component of the aromatic polyhydric carboxylic acid ester may be the same as those mentioned as examples about the alcohol component of the aliphatic polyhydric carboxylic acid ester. At the time of esterifying its carboxylic acid component and its alcohol component, the same esterification catalyst as exemplified above is usable in the same manner as used for the aliphatic polyhydric carboxylic acid ester.

It is advisable to select the weight-average molecular weight of the aromatic polyhydric carboxylic acid ester appropriately from the viewpoint of cable workability and the prevention of the elution-out of the plasticizer from a cable.

### [Embodiment 2: Coated Cable]

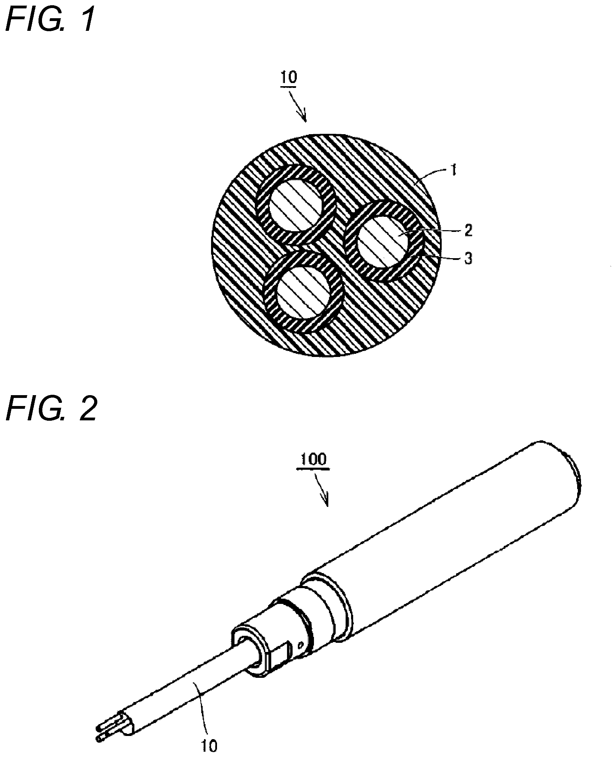

With reference to Fig. 1, a description will be made hereinafter about a coated cable according to Embodiment 2 of the present invention. However, the present invention is not limited thereto.

Fig. 1 is a schematic sectional view of the coated cable according to Embodiment 2. This sectional view is a drawing of a cross section perpendicular to the longitudinal direction of the coated cable.

As illustrated in Fig. 1, this coated cable, which is a coated cable 10, is a cable in which each conductor 2 the outer circumference of which is coated with an insulator 3 is coated with a coating layer 1 made of the cable coating material according to Embodiment 1. The cable illustrated in Fig. 1 is a cable in which three of the conductors 2 are coated with the coating layer 1 made of the cable coating material. However, a single conductor or plural conductors may be used, and the number of conductors is not particularly limited. The conductors 2, the outer circumference of each of which is coated with the insulator 3, may be a product obtained by twisting plural conductors with one another, that is, a twisted wire.

Since the coated cable of the present embodiment has the coating layers which are each made of the cable coating material according to Embodiment 1, the coated cable is higher in flexibility than conventional coated cables and easily handled and laid out. This matter makes it possible to increase the degree of freedom in arranging an electronic device. Additionally, the coating layers made of the cable coating material according to Embodiment 1 have excellent oil resistance, so that the coated cable can realize long-term reliability even in an oil-resistant environment. The coated cable of the present embodiment having such performance is particularly suitable for, for example, an electronic device for industrial machinery.

For the conductors 2, any electric wire material known in the prior art is usable without especial limitation. Examples thereof include copper, aluminum, and alloys of these metals. For the insulators 3, any conductor-coating material known in the prior art is usable without especial limitation. Thus, the material may be the cable coating material according to Embodiment 1.

The method for coating a cable or an electric wire with the cable coating material of Embodiment 1 may be an ordinary extrusion molding method.

For example, the vinyl chloride resin and the plasticizer mixture that are to constitute the cable coating material of Embodiment 1 are supplied into a hopper of an extruder for cable-coating, and then melted and kneaded inside a screw of the extruder. At this time, together with the vinyl chloride resin, additives such as a filler may be appropriately supplied thereinto. The kneaded material is passed through a cross head to be worked into a predetermined shape by a nipple and a dice. The resultant cable coating material is extruded onto the outer circumference of a twisted wire conductor. In this way, the coated cable of the present embodiment can be obtained.

### [Embodiment 3: Electronic Device]

With reference to Fig. 2, a description will be made hereinafter about an electronic device according to Embodiment 3 of the present invention. Fig. 2 is a schematic perspective view of a proximity sensor that is an example of the electronic device according to Embodiment 3. This proximity sensor, which is a proximity sensor 100 in Fig. 2, is an induction type proximity sensor of generating a magnetic field inside a detecting region to detect whether a detection target approaches or not, or whether a detection target is present or absent. The detection target which is to be detected by the proximity sensor 100 is a conductive object. The detection target which is to be detected by the proximity sensor 100 is typically made of a magnetic metal such as iron. The detection target may be made of a nonmagnetic metal such as copper or aluminum.

The proximity sensor 100, which is an electronic device of the present embodiment, has the coated cable 10 according to Embodiment 2 which is high in flexibility and excellent in oil resistance. Thus, the proximity sensor 100 is suitable for industrial machinery. The proximity sensor 100 is particularly suitable as a sensor for industrial machinery used in an oil-resistant environment, for example, a machine tool for cutting work.

### EXAMPLES

Hereinafter, the present invention will be described in more detail by way of working examples, but is not limited thereto. In the description made below, the weight-average molecular weight of any adipic acid ester is a value measured in accordance with the above-mentioned method.

### <Examples 1-9>

### <Production of Coated Cables>

A cable coating material having a formulation shown in Table 1 was melted and kneaded in an extruder, and a twisted wire conductor was coated with the cable coating material to yield each of coated cables according to Examples 1-9. In each of Examples 1-9, the weight-average molecular weight of the adipic acid ester was 3000. The specification of these coated cables was as follows. Examples 4, 7, 8 and 9 are not according to the invention of claim 1.

### <Cable Specification>

Conductor (copper wire): AWG26
Conductor diameter (single wire diameter): 0.16 mm
Number of conductor wires: 7
Twisting pitch: 25 mm ± 5 mm
Cable outside diameter: 4.0 mm ± 0.1 mm

### <Evaluations>

### <Hardness Evaluation>

The cable hardness of the coated cables of Examples 1-9 obtained as described above was measured by a method according to "Plastic Material Durometer Hardness Testing Method (JIS K 7215)". These coated cables were evaluated into two ranks as follows: out of the coated cables, any one about which the measured shore A hardness was 85 or less was ranked as A, and any one about which the shore A hardness was more than 85 was ranked as B. The results are shown in column "Cable hardness" in Table 1. Out of the coated cables, any one in which "A" is described in column "Cable hardness" in Table 1 is better in flexibility than any one in which "B" is described therein.

### <Oil Resistance Evaluation>

The oil resistance of the coated cables of Examples 1-9 was evaluated by a test of immersion in a cutting oil. Specifically, each of the coated cables was immersed in an oil bath of 50°C in which a water-insoluble cutting oil (JIS N species coolant) or a water-soluble cutting oil (JIS A1 species coolant (diluted 30 times with water)) was held for 500 hours. After the immersion, the insulation resistance value of the coated cables was measured.

These coated cables were evaluated into two ranks as follows: out of the coated cables, any one about which the insulation resistance value was more than 50 MΩ was ranked as A, and any one about which the insulation resistance value was 50 MΩ or less was ranked as B. The results are shown in column "Oil resistance (water-insoluble)" and column "Oil resistance (water-soluble)" in Table 1. For the measurement of the insulation resistance value, a Megohm High Tester 3453 (manufactured by HIOKI E.E. CORPORATION) was used.

**[Table 1]**

| | | | Example 1 | Example 2 | Example 3 | Example 4 | Example 5 | Example 6 | Example 7 | Example 8 | Example 9 |
|---|---|---|---|---|---|---|---|---|---|---|---|
| Vinyl chloride resin (parts by weight) | | | 100 | 100 | 100 | 100 | 100 | 100 | 100 | 100 | 100 |
| Plasticizer mixture (parts by weight) | | | 60 | 40 | 40 | 40 | 80 | 80 | 80 | 100 | 100 |
| Plasticizer mixture | Aliphatic | Adipic acid ester (% by weight) | 60 | 40 | 70 | 80 | 40 | 70 | 80 | 40 | 80 |
| | Aromatic | Trimellitic acid ester (% by weight) | 20 | 30 | 15 | 10 | 30 | 15 | 10 | 30 | 10 |
| | | Phthalic acid ester (% by weight) | 20 | 30 | 15 | 10 | 30 | 15 | 10 | 30 | 10 |
| Adipic acid ester weight-average molecular weight | | | 3000 | 3000 | 3000 | 3000 | 3000 | 3000 | 3000 | 3000 | 3000 |
| Evaluation | Cable hardness (Shore A) | | A | A | A | A | A | A | A | A | A |
| | Oil resistance (water-insoluble) | | A | A | A | A | A | A | A | A | A |
| | Oil resistance (water-soluble) | | A | A | A | A | A | A | A | A | A |
| | Notes | | | | | Cable working conditions: restricted | | | Cable working conditions: restricted | Cable working conditions: restricted | Cable working conditions: restricted |

It was clearly verified from Table 1 that the coated cables of Examples 1-9 were high in flexibility and excellent in oil resistance, these examples being coated cables each using a cable coating material containing a vinyl chloride resin and a plasticizer mixture in an amount of 40 to 100 parts by weight relative to 100 parts by weight of the vinyl chloride resin, in which the plasticizer mixture included an aliphatic polyhydric carboxylic acid ester and an aromatic polyhydric carboxylic acid ester, the aliphatic polyhydric carboxylic acid ester had a weight-average molecular weight of 1000 to 6000, and the content by percentage of the aliphatic polyhydric carboxylic acid ester in the total weight of the plasticizer mixture was 40 to 80% by weight, and the content by percentage of the aromatic polyhydric carboxylic acid ester in the total weight of the plasticizer mixture was 20 to 60% by weight.

Furthermore, the coated cables of Examples 1-3, 5 and 6 received no restriction about the cable working conditions to be excellent in workability, these examples being coated cables each using a cable coating material in which the content by percentage of the aliphatic polyhydric carboxylic acid ester in the total weight of the plasticizer mixture was 40 to 70% by weight, and the content by percentage of the aromatic polyhydric carboxylic acid ester in the total weight of the plasticizer mixture was 30 to 60% by weight.

### <Examples 10-18>

Coated cables according to Examples 10-18 were yielded in the same way as in Examples 1-9, respectively, except that in "Production of Coated Cables" of Examples 1-9, the formulations of the cable coating materials were changed to respective formulations shown in Table 2 (specifically, the trimellitic acid ester out of the aromatic polyhydric carboxylic acid esters was changed into a pyromellitic acid ester). These coated cables were evaluated about the cable hardness and oil resistance thereof in the same way as the coated cables of Examples 1-9. The results are shown in Table 2 and examples 13,16-18 are not according to the invention.

**[Table 2]**

| | | | Example 10 | Example 11 | Example 12 | Example 13 | Example 14 | Example 15 | Example 16 | Example 17 | Example 18 |
|---|---|---|---|---|---|---|---|---|---|---|---|
| Vinyl chloride resin (parts by weight) | | | 100 | 100 | 100 | 100 | 100 | 100 | 100 | 100 | 100 |
| Plasticizer mixture (parts by weight) | | | 60 | 40 | 40 | 40 | 80 | 80 | 80 | 100 | 100 |
| Plasticizer mixture | Aliphatic | Adipic acid ester (% by weight) | 60 | 40 | 70 | 80 | 40 | 70 | 80 | 40 | 80 |
| | Aromatic | Pyromellitic acid ester (% by weight) | 20 | 30 | 15 | 10 | 30 | 15 | 10 | 30 | 10 |
| | | Phthalic acid ester (% by weight) | 20 | 30 | 15 | 10 | 30 | 15 | 10 | 30 | 10 |
| Adipic acid ester weight-average molecular weight | | | 3000 | 3000 | 3000 | 3000 | 3000 | 3000 | 3000 | 3000 | 3000 |
| Evaluation | Cable hardness (Shore A) | | A | A | A | A | A | A | A | A | A |
| | Oil resistance (water-insoluble) | | A | A | A | A | A | A | A | A | A |
| | Oil resistance (water-soluble) | | A | A | A | A | A | A | A | A | A |
| | Notes | | | | | Cable working conditions: restricted | | | Cable working conditions: restricted | Cable working conditions: restricted | Cable working conditions: restricted |

It was clearly verified from Table 2 that the coated cables of Examples 10-18 were high in flexibility and excellent in oil resistance, these examples being coated cables each using a cable coating material containing a vinyl chloride resin and a plasticizer mixture in an amount of 40 to 100 parts by weight relative to 100 parts by weight of the vinyl chloride resin, in which the plasticizer mixture included an aliphatic polyhydric carboxylic acid ester and an aromatic polyhydric carboxylic acid ester, the aliphatic polyhydric carboxylic acid ester had a weight-average molecular weight of 1000 to 6000, and the content by percentage of the aliphatic polyhydric carboxylic acid ester in the total weight of the plasticizer mixture was 40 to 80% by weight, and the content by percentage of the aromatic polyhydric carboxylic acid ester in the total weight of the plasticizer mixture was 20 to 60% by weight.

Furthermore, the coated cables of Examples 10-12, 14 and 15 received no restriction about the cable working conditions to be excellent in workability, these examples being coated cables each using a cable coating material in which the content by percentage of the aliphatic polyhydric carboxylic acid ester in the total weight of the plasticizer mixture was 40 to 70% by weight, and the content by percentage of the aromatic polyhydric carboxylic acid ester in the total weight of the plasticizer mixture was 30 to 60% by weight.

### <Examples 19-27>

Coated cables according to Examples 19-27 were yielded in the same way as in Examples 1-9, respectively, except that in "Production of Coated Cables" of Examples 1-9, the formulations of the cable coating materials were changed to respective formulations shown in Table 3. These coated cables were evaluated about the cable hardness and oil resistance thereof in the same way as the coated cables of Examples 1-9. The results are shown in Table 3 and all the examples 19 to 27 are not according to the invention.

**[Table 3]**

| | | | Example 19 | Example 20 | Example 21 | Example 22 | Example 23 | Example 24 | Example 25 | Example 26 | Example 27 |
|---|---|---|---|---|---|---|---|---|---|---|---|
| Vinyl chloride resin (parts by weight) | | | 100 | 100 | 100 | 100 | 100 | 100 | 100 | 100 | 100 |
| Plasticizer mixture (parts by weight) | | | 60 | 40 | 40 | 40 | 80 | 80 | 80 | 100 | 100 |
| Plasticizer mixture | Aliphatic | Adipic acid ester (% by weight) | 60 | 40 | 70 | 80 | 40 | 70 | 80 | 40 | 80 |
| | Aromatic | Trimellitic acid ester (% by weight) | 0 | 0 | 0 | 0 | 0 | 0 | 0 | 0 | 0 |
| | | Phthalic acid ester (% by weight) | 40 | 60 | 30 | 20 | 60 | 30 | 20 | 60 | 20 |
| Adipic acid ester weight-average molecular weight | | | 3000 | 3000 | 3000 | 3000 | 3000 | 3000 | 3000 | 3000 | 3000 |
| Evaluation | Cable hardness (Shore A) | | A | A | A | A | A | A | A | A | A |
| | Oil resistance (water-insoluble) | | A | A | A | A | A | A | A | A | A |
| | Oil resistance (water-soluble) | | A | A | A | A | A | A | A | A | A |
| | Notes | | Use of each example for heat-resistant purpose: restricted | | | | | | | | |

It was clearly verified from Table 3 that the coated cables of Examples 19-27 were high in flexibility and excellent in oil resistance, these examples being coated cables each using a cable coating material containing a vinyl chloride resin and a plasticizer mixture in an amount of 40 to 100 parts by weight relative to 100 parts by weight of the vinyl chloride resin, in which the plasticizer mixture included an aliphatic polyhydric carboxylic acid ester and an aromatic polyhydric carboxylic acid ester, the aliphatic polyhydric carboxylic acid ester had a weight-average molecular weight of 1000 to 6000, and the content by percentage of the aliphatic polyhydric carboxylic acid ester in the total weight of the plasticizer mixture was 40 to 80% by weight, and the content by percentage of the aromatic polyhydric carboxylic acid ester in the total weight of the plasticizer mixture was 20 to 60% by weight.

It was verified by comparison between Examples 1-9 (in Table 1) and Examples 19-27 (in Table 3) that the coated cables according to Examples 1-9, each of which employed a cable coating material including a combination of a trimellitic acid ester and a phthalic acid ester as its aromatic polyhydric carboxylic acid ester, were also better in heat resistance than Examples 19-27, each of which employed a phthalic acid ester alone.

### <Examples 28-36>

Coated cables according to Examples 28-36 were yielded in the same way as in Examples 1-9, respectively, except that in "Production of Coated Cables" of Examples 1-9, the formulations of the cable coating materials were changed to respective formulations shown in Table 4. These coated cables were evaluated about the cable hardness and oil resistance thereof in the same way as the coated cables of Examples 1-9. The results are shown in Table 4 and all the examples 28 to 36 are not according to the invention.

**[Table 4]**

| | | | Example 28 | Example 29 | Example 30 | Example 31 | Example 32 | Example 33 | Example 34 | Example 35 | Example 36 |
|---|---|---|---|---|---|---|---|---|---|---|---|
| Vinyl chloride resin (parts by weight) | | | 100 | 100 | 100 | 100 | 100 | 100 | 100 | 100 | 100 |
| Plasticizer mixture (parts by weight) | | | 60 | 40 | 40 | 40 | 80 | 80 | 80 | 100 | 100 |
| Plasticizer mixture | Aliphatic | Adipic acid ester (% by weight) | 60 | 40 | 70 | 80 | 40 | 70 | 80 | 40 | 80 |
| | Aromatic | Trimellitic acid ester (% by weight) | 40 | 60 | 30 | 20 | 60 | 30 | 20 | 60 | 20 |
| | | Phthalic acid ester (% by weight) | 0 | 0 | 0 | 0 | 0 | 0 | 0 | 0 | 0 |
| Adipic acid ester weight-average molecular weight | | | 3000 | 3000 | 3000 | 3000 | 3000 | 3000 | 3000 | 3000 | 3000 |
| Evaluation | Cable hardness (Shore A) | | A | A | A | A | A | A | A | A | A |
| | Oil resistance (water-insoluble) | | A | A | A | A | A | A | A | A | A |
| | Oil resistance (water-soluble) | | A | A | A | A | A | A | A | A | A |
| | Notes | | Cable working conditions in each example: restricted because of fall in dispersibility of plasticizers | | | | | | | | |

It was clearly verified from Table 4 that the coated cables of Examples 28-36 were high in flexibility and excellent in oil resistance, these examples being coated cables each using a cable coating material containing a vinyl chloride resin and a plasticizer mixture in an amount of 40 to 100 parts by weight relative to 100 parts by weight of the vinyl chloride resin, in which the plasticizer mixture included an aliphatic polyhydric carboxylic acid ester and an aromatic polyhydric carboxylic acid ester, the aliphatic polyhydric carboxylic acid ester had a weight-average molecular weight of 1000 to 6000, and the content by percentage of the aliphatic polyhydric carboxylic acid ester in the total weight of the plasticizer mixture was 40 to 80% by weight, and the content by percentage of the aromatic polyhydric carboxylic acid ester in the total weight of the plasticizer mixture was 20 to 60% by weight.

It was verified by comparison between Examples 1-9 (in Table 1) and Examples 28-36 (in Table 4) that the coated cables according to Examples 1-9, each of which employed a cable coating material including a combination of a trimellitic acid ester and a phthalic acid ester as its aromatic polyhydric carboxylic acid ester, were also better in dispersibility of their plasticizers than Examples 28-36, each of which employed a trimellitic acid ester alone.

### <Comparative Examples 1-7>

Coated cables according to Comparative Examples 1-7 were yielded in the same way as in Examples 1-9 except that in "Production of Coated Cables" of Examples 1-9, the formulations of the cable coating materials were changed to respective formulations shown in Table 5. These coated cables were evaluated about the cable hardness and oil resistance thereof in the same way as the coated cables of Examples 1-9. The results are shown in Table 5.

**[Table 5]**

| | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Vinyl chloride resin (parts by weight) | | | 100 | 100 | 100 | 100 | 100 | 100 | 100 |
| Plasticizer mixture (parts by weight) | | | 40 | 40 | 100 | 100 | 30 | 110 | 60 |
| Plasticizer mixture | Aliphatic | Adipic acid ester (% by weight) | 90 | 30 | 90 | 30 | 60 | 60 | 100 |
| | Aromatic | Trimellitic acid ester (% by weight) | 5 | 35 | 5 | 35 | 20 | 20 | 0 |
| | | Phthalic acid ester (% by weight) | 5 | 35 | 5 | 35 | 20 | 20 | 0 |
| Adipic acid ester weight-average molecular weight | | | 3000 | 3000 | 3000 | 3000 | 3000 | 3000 | 3000 |
| Evaluation | Cable hardness (Shore A) | | - | B | - | A | B | - | - |
| | Oil resistance (water-insoluble) | | - | Not evaluated | - | B | Not evaluated | - | - |
| | Oil resistance (water-soluble) | | - | Not evaluated | - | B | Not evaluated | - | - |
| | Notes | | Difficult to attain cable working | - | Difficult to attain cable working | - | - | Difficult to attain cable working | Difficult to attain cable working |

As shown in Table 5, Comparative Examples 1, 3 and 7 were each low in miscibility of their vinyl chloride resin with their plasticizer mixture, these examples being each an example in which the content by percentage of the aliphatic polyhydric carboxylic acid ester in the total weight of the plasticizer mixture was not included in the range of 40 to 80% by weight. Thus, no cable working was able to be attained under ordinary conditions.

Comparative Example 6, in which its plasticizer mixture was contained in an amount more than 100 parts by weight relative to 100 parts by weight of its vinyl chloride resin, was also low in miscibility of the vinyl chloride resin with the plasticizer mixture. Thus, no cable working was able to be attained under ordinary conditions.

Comparative Example 5, in which its plasticizer mixture was contained in an amount less than 40 parts by weight relative to 100 parts by weight of its vinyl chloride resin, was insufficient in the flexibility of the cable.

Comparative Example 2 was also insufficient in the flexibility of the cable, this example being an example in which the content by percentage of the aliphatic polyhydric carboxylic acid ester in the total weight of the plasticizer mixture was less than 40% by weight and the content by percentage of the aromatic polyhydric carboxylic acid ester in the total weight of the plasticizer mixture was more than 60% by weight. About Comparative Examples 2 and 5, which did not give a sufficient result in the hardness evaluation, the oil resistance thereof was not evaluated.

Comparative Example 4 had flexibility, but was insufficient in oil resistance, this example being an example in which the content by percentage of the aliphatic polyhydric carboxylic acid ester in the total weight of the plasticizer mixture was less than 40% by weight and the content by percentage of the aromatic polyhydric carboxylic acid ester in the total weight of the plasticizer mixture was more than 60% by weight.

### <Examples 37-39 and Comparative Examples 8 and 9>

Coated cables of Examples 37-39 and Comparative Examples 8 and 9 were yielded in the same way as in Examples 1-9 except that in "Production of Coated Cables" of Examples 1-9, the formulations of the cable coating materials were changed to respective formulations shown in Table 6, and adipic acid esters having respective weight-average molecular weights shown in Table 6 were used. These coated cables were evaluated about the cable hardness and oil resistance thereof in the same way as the coated cables of Examples 1-9. The results are shown in Table 6.

**[Table 6]**

| | | | Example 1 | Example 37 | Example 38 | Example 39 | Comparative Example 8 | Comparative Example 9 |
|---|---|---|---|---|---|---|---|---|
| Vinyl chloride resin (parts by weight) | | | 100 | 100 | 100 | 100 | 100 | 100 |
| Plasticizer mixture (parts by weight) | | | 60 | 60 | 60 | 60 | 60 | 60 |
| Plasticizer mixture | Aliphatic | Adipic acid ester (% by weight) | 60 | 60 | 60 | 60 | 60 | 60 |
| | Aromatic | Trimellitic acid ester (% by weight) | 20 | 20 | 20 | 20 | 20 | 20 |
| | | Phthalic acid ester (% by weight) | 20 | 20 | 20 | 20 | 20 | 20 |
| Adipic acid ester weight-average molecular weight | | | 3000 | 1000 | 4000 | 6000 | 700 | 7200 |
| Evaluation | Cable hardness (Shore A) | | A | A | A | A | A | - |
| | Oil resistance (water-insoluble) | | A | A | A | A | B | - |
| | Oil resistance (water-soluble) | | A | A | A | A | B | - |
| | Notes | | | | | Cable working conditions: restricted | | Difficult to attain cable working |

It was clearly verified from Table 6 that the coated cables of Examples 37-39 were high in flexibility and excellent in oil resistance, these examples being coated cables each using a cable coating material containing a vinyl chloride resin and a plasticizer mixture in an amount of 40 to 100 parts by weight relative to 100 parts by weight of the vinyl chloride resin, in which the plasticizer mixture included an aliphatic polyhydric carboxylic acid ester and an aromatic polyhydric carboxylic acid ester, the aliphatic polyhydric carboxylic acid ester had a weight-average molecular weight of 1000 to 6000, and the content by percentage of the aliphatic polyhydric carboxylic acid ester in the total weight of the plasticizer mixture was 40 to 80% by weight, and the content by percentage of the aromatic polyhydric carboxylic acid ester in the total weight of the plasticizer mixture was 20 to 60% by weight.

Furthermore, the coated cables of Examples 1, 37 and 38, the cable coating material used in each of these examples being a material in which the weight-average molecular weight of its aliphatic polyhydric carboxylic acid ester was 1000 to 4000, were better in workability than Example 39, which did not satisfy this requirement.

In contrary to these working examples, Comparative Example 8, the cable coating material used therein being a material in which the weight-average molecular weight of its aliphatic polyhydric carboxylic acid ester was less than 1000, was large in quantity of the eluted-out plasticizers in the test of immersion in a cutting oil, so as not to be sufficient in oil resistance.

Furthermore, Comparative Example 9, in which the weight-average molecular weight of its aliphatic polyhydric carboxylic acid ester was more than 6000, was low in miscibility of the ester with its vinyl chloride resin, and no cable working was able to be attained under ordinary conditions.

The above has described some embodiments and examples of the present invention. However, it is primarily intended that two or more of the above-mentioned embodiments and examples are appropriately combined with one another.

## Claims

1. A cable coating material, comprising a vinyl chloride resin and a plasticizer mixture in an amount of 40 to 80 parts by weight relative to 100 parts by weight of the vinyl chloride resin, wherein the plasticizer mixture comprises an aliphatic polyhydric carboxylic acid ester and an aromatic polyhydric carboxylic acid ester,
the aliphatic polyhydric carboxylic acid ester has a weight-average molecular weight of 1000 to 4000 (measured by GPC as described in the experimental part), and the content by percentage of the aliphatic polyhydric carboxylic acid ester in the total weight of the plasticizer mixture is 40 to 70% by weight,
the content by percentage of the aromatic polyhydric carboxylic acid ester in the total weight of the plasticizer mixture is 30 to 60% by weight;
the aliphatic polyhydric carboxylic acid ester is an adipic acid ester; and
the aromatic polyhydric carboxylic acid ester comprises a phthalic acid ester, and a trimellitic acid ester and/or a pyromellitic acid ester.

2. A coated cable (10), comprising a conductive wire comprising a conductor (2) and an insulator (3), and the cable coating material recited in claim 1 with which the conductive wire is coated.

3. An electronic device, comprising the coated cable (10) recited in claim 2.

## Patentansprüche

1. Kabelummantelungsmaterial, welches ein Vinylchlorid-Harz und ein Weichmacher-Gemisch mit einem Anteil von 40 bis 80 Gewichtsanteilen bezogen auf 100 Gewichtsanteile des Vinylchlorid-Harzes enthält, wobei
das Weichmacher-Gemisch einen aliphatischen mehrwertigen Karbonsäureester und einen aromatischen mehrwertigen Karbonsäureester umfasst,
der aliphatische mehrwertige Karbonsäureester ein gewichtsgemitteltes Molekulargewicht von 1000 bis 4000 (mittels GPC wie im experimentellen Teil beschrieben gemessen) aufweist und der prozentuale Anteil des aliphatischen mehrwertigen Karbonsäureesters an dem Gesamtgewicht des Weichmacher-Gemischs 40 bis 70 Gewichtsprozent beträgt;
der prozentuale Anteil des aromatischen mehrwertigen Karbonsäureesters an dem Gesamtgewicht des Weichmacher-Gemischs 30 bis 60 Gewichtsprozent beträgt;
der aliphatische mehrwertige Karbonsäureester ein Adipinsäureester ist; und
der aromatische mehrwertige Karbonsäureester einen Phthalsäureester, einen Trimellitsäureester und/oder einen Pyromellitsäureester umfasst.

2. Ummanteltes Kabel (10) mit einem leitfähigen Draht, welcher einen Leiter (2) und einen Isolator (3) aufweist, und mit dem Kabelummantelungsmaterial gemäß Anspruch 1, mit welchem der leitfähige Draht ummantelt ist.

3. Elektrische Vorrichtung mit dem ummantelten Kabel (10) gemäß Anspruch 2.

## Revendications

1. Matériau de revêtement de câble, comprenant une résine de chlorure de vinyle et un mélange plastifiant en une quantité de 40 à 80 parties en poids rapportées à 100 parties en poids de la résine de chlorure de vinyle, dans lequel :
le mélange plastifiant comprend un ester d'acide carboxylique aliphatique polyhydrique et un ester d'acide carboxylique aromatique polyhydrique,
l'ester d'acide carboxylique aliphatique polyhydrique a un poids moléculaire moyen en poids de 1 000 à 4 000 (mesuré par CPG comme décrit dans la partie expérimentale), et la teneur en pourcentage de l'ester d'acide carboxylique aliphatique polyhydrique dans le poids total du mélange plastifiant est de 40 à 70 % en poids,
la teneur en pourcentage de l'ester d'acide carboxylique aromatique polyhydrique dans le poids total du mélange plastifiant est de 30 à 60 % en poids;
l'ester d'acide carboxylique aliphatique polyhydrique est un ester d'acide adipique ; et
l'ester d'acide carboxylique aromatique polyhydrique comprend un ester d'acide phtalique, un ester d'acide trimellitique et/ou un ester d'acide pyromellitique.

2. Câble revêtu (10) comprenant un fil conducteur comprenant un conducteur (2) et un isolateur (3), ainsi que le matériau de revêtement de câble selon la revendication 1, dont le fil conducteur est revêtu.

3. Dispositif électronique comprenant le câble revêtu (10) selon la revendication 2.
